# EUROPÄISCHE PATENTANMELDUNG

(11) **EP 3 829 029 A1**
(43) Veröffentlichungstag der Anmeldung: **02.06.2021**
(21) Anmeldenummer: 20202061.6
(22) Anmeldetag: 15.10.2020
(51) Int. Cl.: H02K 1/20, H02K 5/20, H02K 5/02, H02K 5/15, H02K 5/173, H02K 9/19, H02K 11/33, H02K 7/116

(54) **GEHÄUSEANORDNUNG EINER ELEKTRISCHEN ANTRIEBSEINHEIT**

(30) Priorität: 27.11.2019 DE 102019218356
(71) Anmelder: Robert Bosch GmbH, 70442 Stuttgart (DE)
(72) Erfinder: Zweigle, Peter, 71254 Ditzingen (DE); Herzog, Florian, 87541 Bad Hindelang (DE); Schoeneck, Marie-Luies, 71723 Grossbottwar (DE); Schuelin, Anton, 04177 Leipzig (DE); Oetting, Claus-Christian, 87544 Blaichach (DE); Hornyak, Mark, 3519 Miskolc (HU)

(57) **Zusammenfassung**

Die Erfindung bezieht sich auf eine Gehäuseanordnung (8) einer elektrischen Antriebseinheit (10) aus einer elektrischen Maschine (12) und einem Getriebe (14) mit einem Gehäuse (16), das einen Hülsenfortsatz (24) umfasst, in dem eine Statorwicklung (26) aufgenommen ist. Eine Rotorwelle (22) ist in einem A-Lagerschild (18) und einem B-Lagerschild (20) aufgenommen, der im Wesentlichen als flacher Träger (86) ausgeführt ist. Der Hülsenfortsatz (24) des Gehäuses (16) bildet im mit einem Hülsenteil (44) einer Kunststoffaufnahme (30) gefügten Zustand ein Kanalsystem (88) für ein Temperierungsmedium. Darüber hinaus bezieht sich die Erfindung auf die Verwendung der Gehäuseanordnung (8) für eine elektrische Antriebseinheit (10) aus einer elektrischen Maschine (12) und einem Getriebe (14) zum Antrieb eines elektrisch angetriebenen Fahrzeugs.

## Beschreibung

### Technisches Gebiet

Die Erfindung bezieht sich auf eine Gehäuseanordnung einer elektrischen Antriebseinheit aus einer elektrischen Maschine und einem Getriebe mit einem Gehäuse, das einen Hülsenfortsatz umfasst, in dem eine Statorwicklung aufgenommen ist. Des Weiteren bezieht sich die Erfindung auf die Verwendung der Gehäuseanordnung einer elektrischen Antriebseinheit aus einer elektrischen Maschine und einem Getriebe an einem elektrisch angetriebenen Fahrzeug.

### Stand der Technik

DE 44 11 055 C2 bezieht sich auf einen hochdynamischen Elektromotor. Dieser umfasst einen Ständer und einen Innenläufer. Der hochdynamische Elektromotor umfasst einen motorseitig angeordneten Wärmetauscher, in welchem er flüssiges Kühlmedium zirkuliert. Der motorseitige Wärmetauscher ist aus zwei konzentrisch ineinandergeschobenen Hülsen aufgebaut. Eine innere Hülse ist aus gut wärmeleitendem Werkstoff, vorzugsweise Metall, gefertigt. Die innere Hülse umschließt den Ständer vollständig und liegt an dessen äußerer Mantelfläche vollflächig an. Die innere Hülse weist an ihrer Außenseite Kühlrippen gleichbleibender Höhe auf. Auf freien Stirnseiten der Kühlrippen liegt die äußere Hülse unter leichtem Anpressdruck auf, so dass zwischen den beiden Hülsen und (?) je zwei Kühlrippen Strömungskanäle für die Kühlflüssigkeit entstehen. Die Kühlrippen umgeben die innere Hülse entlang einer wendelförmigen Linie derart, dass die einzelnen Strömungskanäle sich zu einem einzigen, den Elektromotor entlang einer wendelförmigen Bahn umgebenden Hohlraum ergänzen. Innerhalb dieses wendelförmig verlaufenden Hohlraums strömt die Kühlflüssigkeit von einem Einlass des motorseitigen Wärmetauschers zu dessen Auslass. Die innere Hülse ist im Bereich ihrer beiden Stirnseiten durch ringförmige Schweißnähte mit je einer rundumlaufenden Manschette verbunden, welche mithilfe von Schraubverbindungen an den äußeren Stirnseiten der Manschetten festgelegt sind. Zur Abdichtung des motorseitigen Wärmetauschers ist die äußere Hülse an ihren beiden Stirnseiten mit den Manschetten verschweißt.

WO 2006/106086 A1 hat einen Kühlmantel zum Gegenstand, der zur Kühlung von elektrischen Maschinen mit einem Gehäuse eingesetzt wird. Das Gehäuse umfasst zwei koaxial ineinander angeordnete hülsenförmige Elemente, die zusammengesteckt einen Kühlmantel des Stators bilden. Dabei ist sowohl das innere Element als auch das äußere Element als Strangpressprofil ausgebildet. Aus den zwei ineinandergeschobenen Elementen ergibt sich ein Zwischenraum, der als Kühlmantel dient. Das innere Element kann dabei als zylinderförmiges Rohr ausgebildet werden, während das äußere Element nach innen offene Kanäle aufweist. Diese Kanäle werden durch Stege gebildet. Zwischen den beiden Elementen befinden sich am jeweiligen Ende O-Ringe, die den gebildeten Kühlmantel abdichten. Das Gehäuse weist ferner zwei Lagerschilder auf, an welchen die beiden Elemente befestigt werden. Das äußere Element umfasst ferner zwei Anschlüsse zur Zu- und Abführung einer den Kühlmantel durchfließenden Kühlflüssigkeit, wobei die Kühlflüssigkeit durch die Anordnung von Stegen mäanderförmig geführt wird.

DE 10 2011 089 667 A1 hat eine elektrische Maschine zum Gegenstand. Die elektrische Maschine umfasst eine in einem Gehäuse gelagerte Rotorwelle, wobei das Gehäuse zur Lagerung der Rotorwelle wenigstens einen Lagerschild mit einer Lagerbuchse oder einer Lagerbohrung aufweist. Ferner ist eine dem Lagerschild zugeordnete Ansteuerelektronik zum Betreiben der elektrischen Maschine vorgesehen. Es wird offenbart, dass die Ansteuerelektronik einen auf einem Grundkörper fest angeordneten Lagesensor zur Erfassung der Winkellage der Rotorwelle aufweist, wobei eine Zentrierhülse in der Lagerbuchse oder Lagerbohrung bereichsweise geführt und zumindest radial mit dem Grundkörper fest verbunden ist.

### Darstellung der Erfindung

Der erfindungsgemäß vorgeschlagenen Lösung folgend wird eine Gehäuseanordnung einer elektrischen Antriebseinheit aus einer elektrischen Maschine und einem Getriebe vorgeschlagen, mit einem Gehäuse, das einen Hülsenfortsatz umfasst, in dem eine Statorwicklung aufgenommen ist. Eine Rotorwelle ist in einem A-Lagerschild und einem B-Lagerschild aufgenommen, wobei der B-Lagerschild als flacher Träger ausgeführt ist und der Hülsenfortsatz des Gehäuses im mit einem Hülsenteil einer Kunststoffaufnahme gefügten Zustand ein Kanalsystem für ein Temperierungsmedium bildet.

Durch die erfindungsgemäß vorgeschlagene Lösung wird einerseits eine leichte Ausführung des B-Lagerschilds als im Wesentlichen flach ausgebildeter Träger erreicht; andererseits wird durch die erfindungsgemäß vorgeschlagene Lösung eine Getriebeanordnung erreicht, bei der durch zwei hülsenförmige Bauteile, d. h. einen Hülsenfortsatz einer Kunststoffaufnahme einerseits und einem Hülsenteil eines Gehäuses andererseits, bei deren in axiale Richtung erfolgender Montage durch Zusammenstecken ein Kanalsystem gebildet wird.

In Weiterbildung der erfindungsgemäß vorgeschlagenen Lösung ist insbesondere der B-Lagerschild als flacher Träger ausgebildet, in welchem ein B-Lager aufgenommen ist, welches beispielsweise als ein Wälzlager mit einem kugelförmigen Wälzkörper beschaffen sein kann.

In Weiterbildung der erfindungsgemäß vorgeschlagenen Lösung zeichnet sich die Gehäuseanordnung dadurch aus, dass die Kunststoffaufnahme eine Leistungselektronik für die elektrische Maschine aufnimmt und als ein Spritzgussbauteil gefertigt ist, was eine hochflexible Konfiguration der Kunststoffaufnahme ermöglicht. Bei der erfindungsgemäß vorgeschlagenen Gehäuseanordnung ist die Kunststoffaufnahme mit Hülsenteil als Spritzgussbauteil gefertigt und wird insbesondere aus einem Kunststoff wie beispielsweise einem duroplastischen Kunststoff, insbesondere einem Phenol- oder Epoxidharz gefertigt. In vorteilhafter Weise ist bei der erfindungsgemäß vorgeschlagenen Kunststoffaufnahme ein Hohlraum vorgesehen, der mittels eines Deckels verschlossen werden kann. Durch das Vorsehen dieses Hohlraums in der Kunststoffaufnahme ist sichergestellt, dass Anbauten an die elektrische Antriebseinheit beschädigungssicher untergebracht werden können und keine äußeren Einflüsse auf diese Anbauten einwirken, da diese durch den Hohlraum, der mit den Deckel verschließbar ist, im Wesentlichen flüssigkeitsdicht und staubdicht gekapselt werden können.

Bei der erfindungsgemäß vorgeschlagenen Getriebeanordnung kann das Kanalsystem, in dem ein Temperierungsmedium, bevorzugt ein Kühlmedium, zirkuliert, entweder an einem Bauteil, insbesondere dem Hülsenteil des Gehäuses, als Spiralkanal ausgebildet sein; alternativ oder ergänzend besteht die Möglichkeit, an diesem Hülsenteil des Getriebes das Kanalsystem aus einer Vielzahl von Axialkanälen auszubilden, die jeweils durch sich parallel zueinander erstreckende Axialrippen begrenzt sind. Eine jede dieser Axialrippen umfasst eine Überströmöffnung, sodass dem Zirkulationsweg des Temperierungsmediums durch ein derart ausgebildetes Kanalsystem eine mäanderförmige Strömungsführung aufgeprägt wird.

In vorteilhafter Weise wird das Kanalsystem durch zwei insbesondere umlaufend ausgebildete Dichtungen gegen die Umgebung abgedichtet. Die insbesondere als Ringe ausgebildeten umlaufend ausgebildeten Dichtelemente werden bei der Montage aufgebracht und fixiert, so dass beim Fügen des Hülsenfortsatzes der Kunststoffaufnahme mit dem Hülsenteil des Getriebes das Kanalsystem entsteht, welches durch die besagten Dichtungen hermetisch gegen die Umwelt abgeschirmt werden kann.

Die Erfindung bezieht sich darüber hinaus auf die Verwendung der Gehäuseanordnung an einer elektrischen Antriebseinheit, die insbesondere eine elektrische Maschine und ein Getriebe zum Antrieb eines elektrisch angetriebenen Fahrzeugs umfasst, sei es ein Personenkraftwagen, sei es ein Nutzfahrzeugoder ein Lastkraftwagen.

### Vorteile der Erfindung

Durch die erfindungsgemäß vorgeschlagene Lösung kann eine erhebliche Vereinfachung der Montage und der Auslegung des B-Lagerschilds als im Wesentlichen flachbauendes Bauteil erreicht werden. Darüber hinaus kann die Kunststoffaufnahme als Spritzgussbauteil gefertigt werden und verschiedenste Geometrien annehmen, so dass Komponenten von Leistungselektroniken unterschiedlicher Baugröße zur Steuerung der elektrischen Maschine in der elektrischen Antriebseinheit untergebracht werden können. Ist insbesondere ein in der Kunststoffaufnahme ausgebildeter Hohlraum mittels eines Deckels verschließbar, so kann insbesondere die Leistungselektronik flüssigkeitsdicht und staubgeschützt gegen Umgebungseinflüsse gekapselt untergebracht werden. Anbauten, die Schaden nehmen könnten, wie beispielsweise Kabelanschlüsse oder Kabelleitungsführungen und dergleichen, können in vorteilhafter Weise in den Hohlraum der Kunststoffaufnahme verlegt werden, so dass ein Schutz gegen Umwelteinflüsse beziehungsweise mechanische Einflüsse von außen gegeben ist.

Es besteht bei der erfindungsgemäß vorgeschlagenen Gehäuseanordnung die Möglichkeit, den Spiralkanal oder die Axialkanäle gebildet durch Axialrippen entweder auf dem Hülsenfortsatz des Getriebes auszubilden oder alternativ das Hülsenteil der Kunststoffaufnahme an dessen Innenmantelfläche mit einem Spiralkanal oder besagten Axialrippen zu versehen. In beiden Ausführungsvarianten besteht die Möglichkeit, das Kanalsystem, in dem das Temperierungsmedium zirkuliert, durch die Montage der besagten Teile der erfindungsgemäß vorgeschlagenen Gehäuseanordnung zu bilden. Da es sich bei beiden Komponenten beispielsweise um Kunststoffspritzgussbauteile handelt, ist eine besonders kostengünstige Herstellung unter Verzicht auf spanabhebende Bearbeitungsverfahren möglich, die bei metallischen Materialien vorgenommen werden müssten.

Durch die erfindungsgemäß vorgeschlagene Lösung lässt sich durch die Verwendung von Kunststoffmaterial anstelle von metallischem Material Gewicht einsparen, was zu einer Erhöhung der erzielbaren Reichweite führt. Eine weitere Kosteneinsparung ist durch geringere Werkzeugkosten gegeben im Vergleich zu Werkzeugkosten, die beispielsweise bei Aluminiumdruckgussfertigung anfallen. Durch die erfindungsgemäß vorgeschlagene Lösung ist eine einfachere elektrische Isolation nach außen hinsichtlich eines Berührschutzes zu hochspannungsführenden Teilen aufgrund des Einsatzes von Kunststoffmaterial gegeben.

### Kurze Beschreibung der Zeichnungen

Anhand der Zeichnungen wird die Erfindung nachstehend eingehender beschrieben.

Es zeigen:
- Figur 1: einen Längsschnitt durch eine elektrische Antriebseinheit,
- Figur 2: eine perspektivische Ansicht von miteinander gefügten Komponenten der elektrischen Antriebseinheit,
- Figur 3: eine perspektivische Ansicht des Gehäuses mit daran ausgebildetem Hülsenfortsatz,
- Figur 4: einen Längsschnitt durch eine erfindungsgemäß vorgeschlagene Gehäuseanordnung umfassend eine Kunststoffaufnahme mit Hülsenteil, eine elektrische Maschine, ein Gehäuse eines Getriebes mit daran ausgebildetem Hülsenfortsatz,
- Figur 5: eine weitere Darstellung der erfindungsgemäß vorgeschlagenen Gehäuseanordnung mit weiteren Details und
- Figur 6: eine gefügte Darstellung der Komponenten der Gehäuseanordnung.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

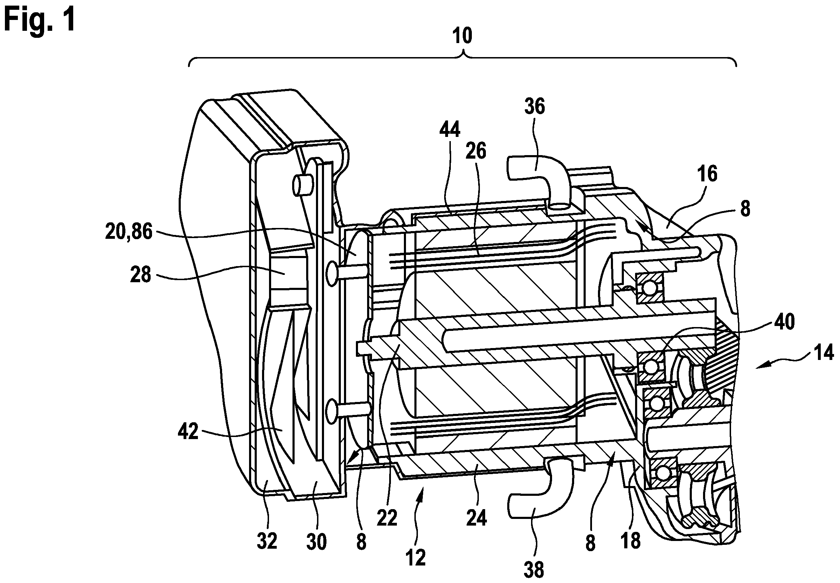

Figur 1 zeigt eine perspektivische Ansicht einer elektrischen Antriebseinheit 10. Die elektrische Antriebseinheit 10 umfasst eine Gehäuseanordnung 8, die durch ein Gehäuse 16 gebildet wird, an dem sich ein Hülsenfortsatz 24 befindet. Des Weiteren umfasst die Gehäuseanordnung 8 gemäß der perspektivischen Darstellung in Figur 1 eine Kunststoffaufnahme 30, an der ein Hülsenteil 44 ausgebildet ist. Die Kunststoffaufnahme 30 samt Hülsenteil 44 wird bevorzugt als ein einziges Spritzgussbauteil gefertigt, was eine besonders einfache und gewichtssparende Herstellungsmöglichkeit darstellt.

Die elektrische Antriebseinheit 10, die in der Gehäuseanordnung 8 gemäß Figur 1 untergebracht ist, umfasst eine elektrische Maschine 12 sowie ein Getriebe 14. Das Getriebe 14 ist im Wesentlichen vom Gehäuse 16 umschlossen. Im Gehäuse 16 befindet sich ein A-Lagerschild 18. In diesem ist ein Ende einer Rotorwelle 22 aufgenommen. Das andere Ende der Rotorwelle 22 ist in einem B-Lagerschild 20 aufgenommen, welches im Wesentlichen als ein flacher Träger 86 ausgebildet ist. Die Ausbildung des B-Lagerschilds 20 als flacher Träger 86 erlaubt eine weitere Gewichtsreduktion des B-Lagerschilds 20, dessen Funktion lediglich noch die Abstützung der Rotorwelle 22 ist. Zu diesem Zweck umfasst der als flacher Träger 86 ausgebildete B-Lagerschild 20 ein B-Lager 42, bei dem es sich um ein Wälzlager handelt, beispielsweise um ein Kugellager. Es ist selbstverständlich möglich, als B-Lager 42 im B-Lagerschild 20 auch ein Wälzlager mit einer anderen Wälzkörpergeometrie, beispielsweise ein Kegelrollenlager oder ein Zylinderrollenlager oder dergleichen anzuordnen, und die Rotorwelle 22 auf diese Weise abzustützen.

Der perspektivischen Darstellung der Figur 1 ist des Weiteren zu entnehmen, dass die Kunststoffaufnahme 30 einen Hohlraum umfasst, in dem eine Leistungselektronik 28 untergebracht ist. Über die Leistungselektronik 28 wird die elektrische Maschine 12 der elektrischen Antriebseinheit 10 gesteuert. Einstückig mit der Kunststoffaufnahme 30 ausgeführt umfasst diese das Hülsenteil 44, welches den Hülsenfortsatz 24 am Gehäuse 16 überdeckt. Durch das Ineinanderstecken des Hülsenfortsatzes 24 und des Hülsenteils 44 in axiale Richtung entsteht die besagte Gehäuseanordnung 8. In der Darstellung gemäß Figur 1 erfolgt eine Zufuhr eines Temperierungsmediums, insbesondere eines Kühlfluids, über einen Zulauf 36. Das Temperierungsmedium wird über einen Ablauf 38 abgeleitet.

Im Hülsenfortsatz 24 des Gehäuses 16 ist eine Statorwicklung 26 der elektrischen Maschine 12 aufgenommen. Die Wicklung der Rotorwelle 22 ist in der perspektivischen Schnittdarstellung gemäß Figur 1 lediglich angedeutet.

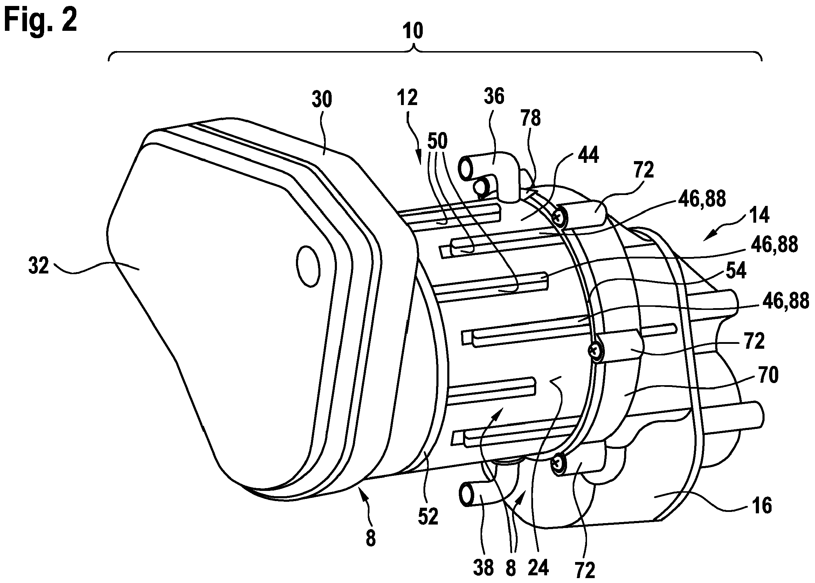

Figur 2 zeigt eine perspektivische Ansicht der Getriebeanordnung 8 der elektrischen Antriebseinheit 10. In der in Figur 2 dargestellten Ausführungsvariante ist beispielsweise auf der Mantelfläche des Hülsenfortsatzes 24 am Gehäuse 16 ein Kanalsystem 88 derart ausgebildet, dass dieses durch eine Rippenstruktur 46 aus voneinander beabstandeten Axialkanälen 50 gebildet wird. Die einzelnen Axialkanäle 50 des Kanalsystems 88 erstrecken sich im Wesentlichen parallel zueinander und bilden einen Strömungsweg, bei dem das Temperierungsmedium über Überströmöffnungen 51, die durch verkürzt ausgebildete Rippen gebildet werden, in mäanderförmiger Strömungsführung durch das Kanalsystem 88 geleitet wird. Das Kanalsystem 88 gemäß der Darstellung in Figur 2 ist von dem hier transparent angedeuteten Hülsenteil 44 der Kunststoffaufnahme 30 überdeckt. Durch die in Figur 2 dargestellte Rippenstruktur 46 des Kanalsystems 88 wird dem Temperierungsmedium auf seinem Weg durch die Axialkanäle 50 ein mäanderförmig verlaufender Strömungsweg aufgeprägt. Figur 2 zeigt des Weiteren, dass eine Abdichtung durch einen ersten umlaufenden Dichtring 52 sowie einen zweiten umlaufend ausgebildeten Dichtring 54 erfolgt. Damit ist der Strömungspfad des Temperierungsmediums durch das Kanalsystem 88 nach außen abgedichtet, so dass kein Temperierungsmedium in die Umwelt gelangt. Aus Figur 2 geht des Weiteren hervor, dass der in Figur 1 im Schnitt dargestellte Hohlraum der Kunststoffaufnahme 30 durch einen Deckel 32 verschlossen ist.

Die Zufuhr des Kühlmediums erfolgt durch den Zulauf 36; dessen Ableitung durch den Ablauf 38. Figur 2 zeigt des Weiteren, dass das Gehäuse 16 einen Gehäuseflansch 70 umfasst, an welchem beispielsweise eine ringförmige Anlagefläche der Kunststoffaufnahme 30 beziehungsweise von deren Hülsenteil 44 an mehreren Befestigungsteilen 72 verschraubt sein kann.

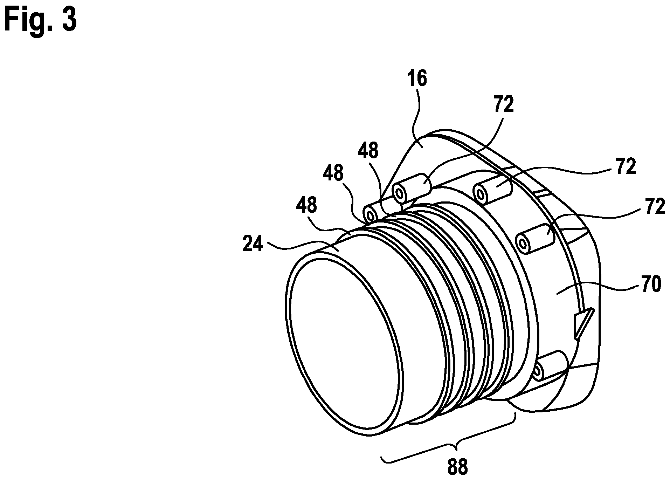

Figur 3 zeigt in perspektivischer Ansicht das Gehäuse 16, an dem ein Hülsenfortsatz 24 ausgebildet ist. Auf der Mantelfläche des Hülsenfortsatzes 24 erstreckt sich ein Spiralkanal 48 in Umfangsrichtung, der das Kanalsystem 88 zur Zirkulation des Temperierungsmediums darstellt. Am Gehäuse 16 ist der Gehäuseflansch 70 ausgeführt, an dem gemäß Figur 2 eine Stirnseite des Hülsenteils 44 der Kunststoffaufnahme 30 an Befestigungsstellen 72 beispielsweise verschraubt werden kann. Befestigungsstellen 72 können in unregelmäßiger oder regelmäßiger Teilung in Umfangsrichtung am Gehäuseflansch 70 des Getriebes 16 angeordnet werden. Der Spiralkanal 48 erstreckt sich hier gemäß der Darstellung in Figur 3 auf der Mantelfläche des Hülsenfortsatzes 24. Alternativ besteht die Möglichkeit, den Spiralkanal 48 auch an der Innenseite des Hülsenteils 44 der Kunststoffaufnahme 30 auszuführen. Bei der Montage des Hülsenteils 44 der Kunststoffaufnahme 30 wird der Spiralkanal 48, wie er in Figur 3 dargestellt ist, vom Hülsenteil 44 in axiale Richtung überdeckt, sodass das im Wesentlichen geschlossene Kanalsystem 88 entsteht.

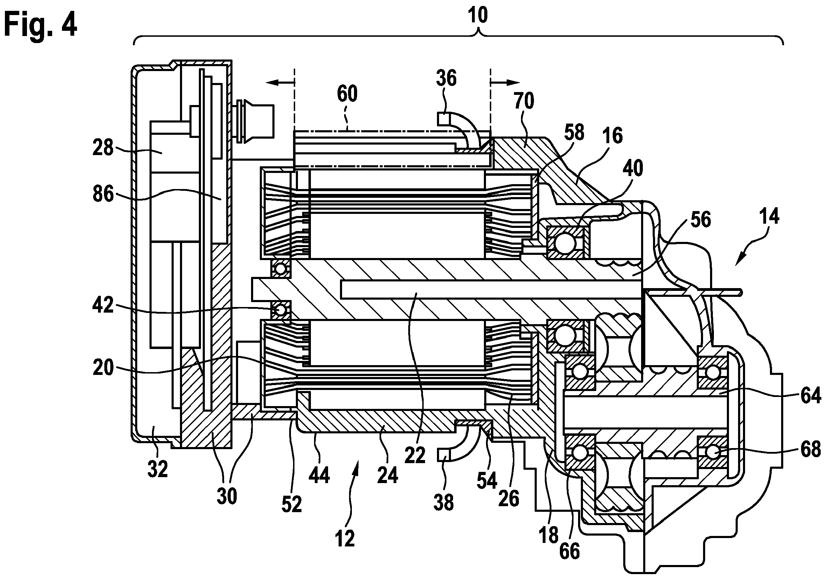

Figur 4 zeigt die Gehäuseanordnung 8 der elektrischen Antriebseinheit 10 umfassend die elektrische Maschine 12 sowie das Getriebe 14, welches im Wesentlichen im Gehäuse 16 aufgenommen ist. Das Gehäuse 16 umfasst den A-Lagerschild 18 mit dem A-Lager 40 zur Lagerung der Rotorwelle 22. Deren gegenüberliegendes Ende ist im B-Lager 42 aufgenommen, welches im B-Lagerschild 20 eingelassen ist und im Wesentlichen als flacher Träger 86 ausgeführt ist. Die Wicklung der Rotorwelle 22 wird von der Statorwicklung 26, die im Hülsenfortsatz 24 des Gehäuses 16 untergebracht ist, umschlossen. Das Gehäuse 16 umfasst darüber hinaus den Flansch 70 sowie den Zulauf 36 für das Temperierungsmedium sowie dessen Ablauf 38.

Im gefügten Zustand der Kunststoffaufnahme 30 mit Hülsenteil 44 auf dem Hülsenfortsatz 24 des Gehäuses 16 entsteht ein erster Temperierungsbereich 60. Diesem wird das Temperierungsmedium über den Zulauf 36 zugeführt und über den Ablauf 38 von diesem abgeleitet. Durch das Temperierungsmedium kann die Verlustwärme der elektrischen Maschine 12 abtransportiert werden.

Aus der Darstellung gemäß Figur 4 geht hervor, dass der erste Temperierungsbereich 60 im Wesentlichen im Hülsenteil 44 der Kunststoffaufnahme 30 ausgeführt ist.

Wie aus dem Längsschnitt gemäß Figur 4 des Weiteren hervorgeht, weist die Rotorwelle 22 ein Ritzel 56 auf. Dieses kämmt mit einem weiteren Zahnrad, welches an einer Zwischenwelle 64 aufgenommen ist. Die Zwischenwelle 64 ist in einem ersten Lager 66 und in einem zweiten Lager 68 im Gehäuse 16 gelagert. Eine Ölseite des Getriebes 14 und der Innenraum der elektrischen Maschine 12 sind durch einen radialen Wellendichtring 58 gegeneinander abgedichtet.

Die Abdichtung des ersten Temperierungsbereichs 60 gemäß der Längsschnittdarstellung in Figur 4 erfolgt durch den ersten umlaufenden Dichtring 52 sowie den zweiten umlaufenden Dichtring 54, der sich zwischen der Stirnseite des Hülsenteils 44 der Kunststoffaufnahme 30 und dem Gehäuseflansch 70 des Gehäuses 16 befindet.

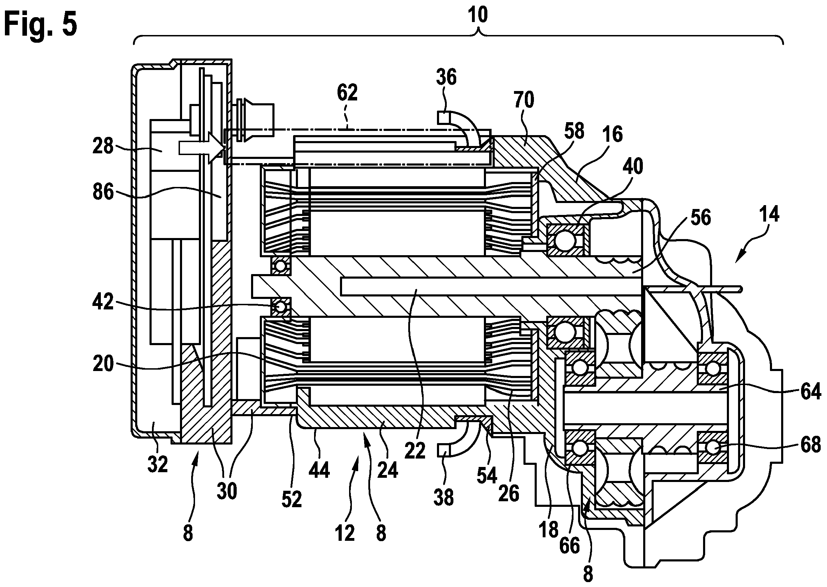

Figur 5 zeigt einen erweiterten zweiten Temperierungsbereich 62, der sich über das Hülsenteil 44 der Kunststoffaufnahme 30 in axiale Richtung bis an den Hohlraum in der Kunststoffaufnahme 30 erstreckt, die die Leistungselektronik 28 zur Steuerung der elektrischen Maschine 12 der elektrischen Antriebseinheit 10 aufnimmt. Im Vergleich zum ersten Temperierungsbereich 60, wie er in Figur 4 dargestellt ist, erlaubt der zweite erweiterte Temperierungsbereich 62 gemäß der Darstellung in Figur 5 auch ein Ableiten von Verlustwärme aus dem Hohlraum der Kunststoffaufnahme 30, die beispielsweise über den Deckel 32 verschlossen sein kann.

Aus Figur 5 geht darüber hinaus hervor, dass der B-Lagerschild 20 im Wesentlichen als flacher Träger 86 ausgeführt ist und lediglich das B-Lager 42 zur Abstützung der Rotorwelle 22 aufnimmt. Auch in der Längsschnittdarstellung gemäß Figur 5 kämmt das Ritzel 56 der Rotorwelle 22 mit einem Zwischenrad der Zwischenwelle 64, die sich wiederum innerhalb des Gehäuses 16 in einem ersten Lager 66 und einem zweiten Lager 68 aufgenommen befindet. Auch bei der Darstellung gemäß Figur 5 erfolgt die Trennung der Getriebeseite vom Hohlraum der elektrischen Maschine 12 durch den der Rotorwelle 22 zugeordneten Radialwellendichtring 58. Die Statorwicklung 26 ist drehfest im Hülsenfortsatz 24 des Gehäuses 16 aufgenommen; die Zufuhr des Temperierungsmediums erfolgt in der Ausführungsvariante gemäß Figur 5 mit dem zweiten erweiterten Temperierungsbereich 62 analog zur Ausführungsvariante gemäß Längsschnitt nach Figur 4 über den Zulauf 36; der Abtransport der erwärmten, die Verlustwärme der elektrischen Maschine 12 abführenden Kühlflüssigkeit erfolgt über den Ablauf 38.

Aus den beiden Darstellungen gemäß den Figuren 4 und 5 geht hervor, dass bei der erfindungsgemäß vorgeschlagenen Gehäuseanordnung 8 im Wesentlichen beim axialen Fügen der Kunststoffaufnahme 30 mit Hülsenteil 44 auf dem Hülsenfortsatz 24 des Gehäuses 16 das geschlossene Kanalsystem 88 entsteht. Beim axialen Fügen der beiden Komponenten ineinander werden die erste umlaufende Dichtung 52 sowie die zweite umlaufende Dichtung 54 positioniert und ausgerichtet, sodass die sich ergebenden Temperierungsbereiche 60, 62 gegen die Umwelt abgedichtet sind und kein Temperierungsmedium/Kühlmedium nach außen austreten kann.

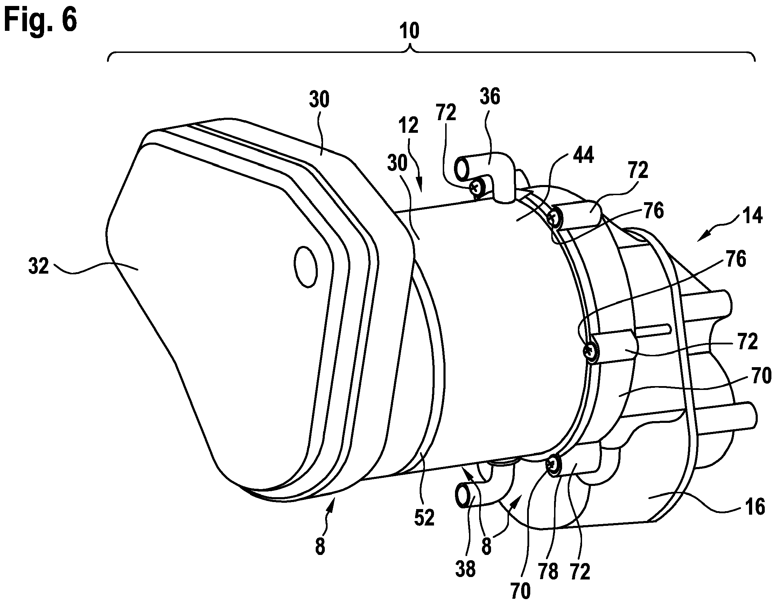

Der Darstellung gemäß Figur 6 ist eine perspektivische Anordnung der elektrischen Antriebseinheit 10 zu entnehmen. An der äußeren Seite der Kunststoffaufnahme 30 befindet sich der Deckel 32, über welchen der Hohlraum der Kunststoffaufnahme 30 gegen Umwelteinflüsse von außen gekapselt ist. Von der Kunststoffaufnahme 30 aus erstreckt sich das Hülsenteil 44 in axiale Richtung und überdeckt im Wesentlichen die in Figur 6 nicht dargestellte Statorwicklung 26 der elektrischen Maschine 12, die ihrerseits von dem Hülsenfortsatz 24 des Gehäuses 16 überdeckt ist. Eine Stirnseite des Hülsenteils 44 ist an mehreren Befestigungsstellen 72 des Gehäuseflanschs 70 des Gehäuses 16 befestigt, die entsprechend einer regelmäßigen oder unregelmäßigen Teilung 74 in Umfangsrichtung am Gehäuseflansch 70 ausgeführt sein können. An den Befestigungsstellen 72 können beispielsweise Verschraubungen 76 mit oder ohne Hülsen 84 ausgeführt sein. Figur 6 zeigt, dass am Hülsenteil 44 der Kunststoffaufnahme 30 einander gegenüberliegend der Zulauf 36 beziehungsweise der Ablauf 38 zur Zu- beziehungsweise Ableitung des Temperierungsmediums angeordnet sind.

Während in der perspektivischen Darstellung gemäß Figur 6 die ersten Verbindungsstellen 78 zwischen dem Hülsenteil 44 der Kunststoffaufnahme 30 einerseits und dem Gehäuseflansch 70 des Gehäuses 16 andererseits mittels Verschraubungen 76 dargestellt ist, so zeigt Figur 7 zweite Verbindungsstellen 78, an denen die Kunststoffaufnahme 30 beispielsweise mit dem als flachem Träger 86 ausgebildeten B-Lagerschild 20 über Verschraubungen gefügt sein kann. Im Falle der Ausbildung zweiter Verbindungsstellen 80 kommen Hülsen 84 zum Einsatz, die beispielsweise als Hülsen 84 für Durchsteckschrauben ausgebildet sein können, so dass die Kunststoffaufnahme 30 auf der dem Deckel 32 abgewandten Seite mit dem B-Lagerschild 20, ausgebildet als flacher Träger 86, verschraubt werden kann. In diesem Fall zeigt das B-Lagerschild 20, ausgeführt als flacher Träger 86, ein Bohrungsbild 82, sodass die zweiten Verbindungsstellen 80 an unterschiedlichen Positionen in Bezug auf die Fläche des flachen Trägers 86 am B-Lagerschild 20 ausgeführt werden könnten.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Gehäuseanordnung (8) einer elektrischen Antriebseinheit (10) aus einer elektrischen Maschine (12) und einem Getriebe (14) mit einem Gehäuse (16), das einen Hülsenfortsatz (24) umfasst, in dem eine Statorwicklung (26) aufgenommen ist, **dadurch gekennzeichnet, dass** eine Rotorwelle (22) in einem A-Lagerschild (18) und einem B-Lagerschild (20) aufgenommen ist, welcher als flacher Träger (86) ausgeführt ist, und der Hülsenfortsatz (24) des Gehäuses (16) im mit einem Hülsenteil (44) einer Kunststoffaufnahme (30) gefügten Zustand ein Kanalsystem (88) für ein Temperierungsmedium bildet.

2. Gehäuseanordnung (8) gemäß Anspruch 1, **dadurch gekennzeichnet, dass** der B-Lagerschild (20) als flacher Träger (86) ein B-Lager (42) aufnimmt.

3. Gehäuseanordnung (8) gemäß den Ansprüchen 1 und 2, **dadurch gekennzeichnet, dass** die Kunststoffaufnahme (30) eine Leistungselektronik (28) der elektrischen Maschine (12) aufnimmt.

4. Gehäuseanordnung (8) gemäß den Ansprüchen 1 bis 3, **dadurch gekennzeichnet, dass** die Kunststoffaufnahme (30) mit Hülsenteil (44) als Spritzgussbauteil und aus einem duroplastischen Kunststoff, insbesondere einem Phenol- oder Epoxidharz gefertigt ist.

5. Gehäuseanordnung (8) gemäß Anspruch 4, **dadurch gekennzeichnet, dass** die Kunststoffaufnahme (30) und das Hülsenteil (44) aus gleichem Kunststoffmaterial gefertigt sind, um unterschiedliche Ausdehnungskoeffizienten zu vermeiden.

6. Gehäuseanordnung (8) gemäß den Ansprüchen 1 bis 4, **dadurch gekennzeichnet, dass** die Kunststoffaufnahme (30) einen Hohlraum umfasst, der mittels eines Deckels (32) verschließbar ist.

7. Gehäuseanordnung (8) gemäß einem der vorstehenden Ansprüche, **dadurch gekennzeichnet, dass** das Kanalsystem (88) einen Spiralkanal (48) aufweist, der sich auf dem Hülsenfortsatz (24) am Gehäuse (16) erstreckt.

8. Gehäuseanordnung (8) gemäß einem der vorstehenden Ansprüche, **dadurch gekennzeichnet, dass** das Kanalsystem (88) eine Anzahl von Axialkanälen (50) umfasst, die sich senkrecht zur Strömungsrichtung eines Temperierungsmediums entlang des Umfangs des Hülsenfortsatzes (24) des Gehäuses (16) erstrecken.

9. Gehäuseanordnung (8) gemäß Anspruch 8, **dadurch gekennzeichnet, dass** die einzelnen Axialkanäle (50) jeweils Überströmöffnungen (51) umfassen, durch welche das Temperierungsmedium in eine jeweils benachbarte Sektion überströmt.

10. Gehäuseanordnung (8) gemäß einem der vorstehenden Ansprüche, **dadurch gekennzeichnet, dass** entweder der Spiralkanal (48) oder die Axialkanäle (50) am Umfang des Hülsenfortsatzes (24) des Gehäuses (16) im montierten Zustand vom Hülsenteil (44) der Kunststoffaufnahme (30) überdeckt sind.

11. Gehäuseanordnung (8) gemäß einem der vorstehenden Ansprüche, **dadurch gekennzeichnet, dass** die Abdichtung des Hülsenfortsatzes (24) des Gehäuses (16) und des Hülsenteils (44) der Kunststoffaufnahme (30) im gefügten Zustand durch eine erste umlaufende Dichtung (52) und eine zweite umlaufende Dichtung (54) erfolgt.

12. Gehäuseanordnung (8) gemäß einem der Ansprüche 1 bis 11, **dadurch gekennzeichnet, dass** die erste umlaufende Dichtung (52) und die zweite umlaufende Dichtung (54) in Zwei-Komponenten-Herstellungsweise in den Hülsenfortsatz (24) des Gehäuses (10) beziehungsweise das Hülsenteil (44) der Kunststoffaufnahme (30) integriert sind.

13. Gehäuseanordnung (8) gemäß einem der Ansprüche 1 bis 10, **dadurch gekennzeichnet, dass** ein erster Temperierungsbereich (60) durch die Außenumfangsfläche des Hülsenteils (44) der Kunststoffaufnahme (30) gegeben ist und ein zweiter erweiterter Temperierungsbereich (62), den ersten Temperierungsbereich (60) umfassend, sich bis in die Kunststoffaufnahme (30) erstreckt.

14. Verwendung der Gehäuseanordnung (8) gemäß einem der vorstehenden Ansprüche zur Aufnahme einer elektrischen Antriebseinheit (10), eine elektrische Maschine (12) und ein Getriebe (14) umfassend, zum Antrieb eines elektrisch angetriebenen Fahrzeugs, beispielsweise eines Personenkraftwagens, eines Nutzfahrzeugs oder eines Lastkraftwagens.
